(19) Europäisches Patentamt
European Patent Office
Office européen des brevets

(11) **EP 1 872 456 B1**

(12) **EUROPÄISCHE PATENTSCHRIFT**

(45) Veröffentlichungstag und Bekanntmachung des Hinweises auf die Patenterteilung:
**08.10.2008 Patentblatt 2008/41**

(21) Anmeldenummer: **06743327.6**

(22) Anmeldetag: **18.04.2006**

(51) Int Cl.:
**H02J 1/00** $^{(2006.01)}$

(86) Internationale Anmeldenummer:
**PCT/EP2006/061646**

(87) Internationale Veröffentlichungsnummer:
**WO 2006/111532 (26.10.2006 Gazette 2006/43)**

(54) **VERFAHREN ZUM BETREIBEN EINES KONDENSATORS**

METHOD FOR THE OPERATION OF A CAPACITOR

PROCEDE POUR FAIRE FONCTIONNER UN CONDENSATEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.04.2005 DE 102005018338**

(43) Veröffentlichungstag der Anmeldung:
**02.01.2008 Patentblatt 2008/01**

(73) Patentinhaber: **SIEMENS AKTIENGESELLSCHAFT**
**80333 München (DE)**

(72) Erfinder:
• **RECHENBERG, Karsten**
**91077 Dormitz (DE)**
• **GAUDENZ, Markus Matthias**
**91056 Erlangen (DE)**

(56) Entgegenhaltungen:
**US-A- 6 066 936      US-A1- 2002 140 405**
**US-A1- 2003 139 859**

## Beschreibung

Die Erfindung bezieht sich auf ein Verfahren zum Betreiben eines Kondensators, insbesondere als Energiespeicher für Schienenfahrzeuge.

Der Erfindung liegt die Aufgabe zugrunde, ein Verfahren zum Betreiben eines Kondensators anzugeben, das auch bei ungünstigen äußeren Randbedingungen, wie beispielsweise einer hohen Umgebungstemperatur, und/oder bei bereits gealterten Kondensatoren eine optimale Ausnutzung des noch nutzbaren Energiespeicherpotenzials des Kondensators ermöglicht.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Das Dokument US 2003/139859 A1 offenbart ein Verfahren nach dem Oberbegriff des Anspruchs 1.

Danach ist erfindungsgemäß vorgesehen, dass zum Speichern von Energie in einem Kondensator dieser elektrisch aufgeladen wird, und zwar maximal soweit, bis er eine vorgegebene Maximalspannung erreicht hat. Bei der Energieentnahme wird der Kondensator nur soweit entladen, dass eine vorgegebene Minimalspannung des Kondensators erhalten bleibt. Die vorgegebene Minimalspannung ist erfindungsgemäß eine variable Größe, die in Abhängigkeit von einem die jeweilige Innentemperatur des Kondensators angebenden Temperaturwert eingestellt wird.

Ein wesentlicher Vorteil des erfindungsgemäßen Verfahrens besteht darin, dass ein Aufwärmen des Kondensators während des Betriebs auf Werte oberhalb einer zulässigen Betriebstemperatur zuverlässig verhindert wird; denn bei dem erfindungsgemäßen Verfahren wird die für die Energieentnahme vorgegebene Minimalspannung temperaturabhängig festgelegt. Die Erfindung macht sich dabei die Erkenntnisse zunutze, dass die Erwärmung des Kondensators umso mehr ansteigt, je geringer die Ladung des Kondensators ist. Dies liegt konkret daran, dass bei einer Energieentnahme die Spannung des Kondensators abfällt. Wird nun eine konstante elektrische Leistung aus dem Kondensator entnommen - wie dies bei einem Einsatz des Kondensators beispielsweise in Schienenfahrzeugen üblich ist-, so muss ein Spannungsabfall der Ausgangsspannung des Kondensators durch einen höheren Entladestrom ausgeglichen werden, da nämlich das Produkt aus Ausgangsspannung und Ausgangsstrom die Entnahmeleistung bestimmt. Jeder Kondensator weist technisch bedingt stets einen Innenwiderstand auf, durch den der Entladestrom des Kondensators fließt. Der Stromfluss durch den Innenwiderstand führt zu einer thermischen Verlustleistung innerhalb des Kondensators und damit zu einem Aufheizen des Kondensators. Im Ergebnis steigen die thermischen Verluste des Kondensators somit umso mehr an, je weiter der Kondensator entladen wird. Bei dem erfindungsgemäßen Verfahren lässt sich nun eine unzulässige Temperaturerhöhung des Kondensators vermeiden, indem die Minimalspannung des Kondensators für den Entladevorgang in Abhängigkeit von der jeweiligen Innentemperatur des Kondensators eingestellt wird. Wird beispielsweise die Minimalspannung erhöht, so wird der "Betriebsbereich" bzw. der "Energieentnahmebereich" des Kondensators begrenzt. Der Kondensator wird durch die Erhöhung der Minimalspannung damit in einen Betriebsbereich gebracht, in dem er eine besonders große Ausgangsspannung aufweist; bei großen Ausgangsspannungen kann jedoch eine fest vorgegebene Entladeleistung des Kondensators auch bei relativ kleinen Entladeströmen bereitgestellt werden, sodass thermische Verluste innerhalb des Kondensators reduziert werden. Konkret kann also bei dem erfindungsgemäßen Verfahren der "thermische Wirkungsgrad" des Kondensators temperaturabhängig verbessert werden, indem dieser in einem höheren Ausgangsspannungsbereich und damit bei kleineren Entladeströmen betrieben wird, sobald festgestellt wird, dass die Innentemperatur des Kondensators zu hohe Werte erreicht. Ein wesentlicher Gedanke der Erfindung besteht dabei darin, dass die nutzbare Energiespeicherkapazität des Kondensators aufgrund der Erhöhung der Minimalspannung nur unwesentlich abnimmt, da der Energiespeicherinhalt des Kondensators vom Quadrat der Spannung abhängt; es gilt nämlich

$$W = \tfrac{1}{2}\, C*U^2,$$

wobei W die im Kondensator gespeicherte Energie, C die Kapazität und U die Spannung bezeichnen. Dies soll anhand eines Zahlenbeispiels nachfolgend verdeutlicht werden: Beträgt die Minimalspannung beispielsweise 50% der Maximalspannung, so kann während eines Entnahmevorgangs aus einem vollständig aufgeladenen Kondensator 75% der abgespeicherten Energie entnommen werden. Wird die Minimalspannung nun auf einen Wert von 60% der Maximalspannung erhöht, so ist dies - bezogen auf eine Minimalspannung von 50% - eine Erhöhung des Spannungswertes um 20%; trotz dieser Erhöhung um 20% kann dennoch noch ein Energieanteil von 64% der abgespeicherten Energie aus dem Kondensator entnommen werden, so dass die Reduktion der entnehmbaren Energie lediglich 15% - bezogen auf den maximalen Energieentnahmewert von 75% - beträgt. Aufgrund des quadratischen Zusammenhangs zwischen der Spannung des Kondensators und der darin gespeicherten Energie sowie aufgrund des quadratischen Zusammenhangs zwischen der thermischen Erwärmung des Kondensators und dem durch den Kondensator fließenden Strom kann somit durch ein geringfügiges Reduzieren der Mindestspannung für den Entladevorgang des Kondensators eine erhebliche Reduktion der thermischen Erwärmung erreicht werden, ohne dass die tatsächlich entnehmbare Leistung des Kondensators wesentlich reduziert wird.

Ein weiterer wesentlicher Vorteil der Erfindung besteht darin, dass auf aufwendige Kühlmaßnahmen zum Kühlen des Kondensators ganz oder zumindest teilweise verzichtet werden kann, da ein Überhitzen des Kondensators durch das erfindungsgemäße Nachführen des Minimalspannungswertes in Abhängigkeit von der Temperatur zuverlässig verhindert werden kann.

Ein dritter wesentlicher Vorteil des erfindungsgemäßen Verfahrens besteht darin, dass die Lebensdauer des Kondensators deutlich erhöht werden kann, da nämlich ein den Kondensator schädigender Betrieb in einem erhöhten Temperaturbereich durch das Nachregeln der Mindestspannung vermeidbar ist.

Ein vierter wesentlicher Vorteil des erfindungsgemäßen Verfahrens besteht darin, dass ein vollständiges Abschalten des Kondensators - temperaturbedingt - nur sehr selten erforderlich ist, weil das Auftreten kritischer Temperaturen durch eine Reduktion des Betriebsbereichs des Kondensators meist schon im Vorfeld verhindert werden kann.

Wie bereits erwähnt, wird die Minimalspannung vorzugsweise umso größer gewählt, je größer der Temperaturwert ist, um den Betriebsbereich des Kondensators bei hohen Temperaturen auf einen oberen Spannungsbereich festzulegen, in dem die thermische Verluste geringer als in Betriebsbereichen mit kleiner Ausgangsspannung sind.

Das erläuterte Verfahren lässt sich beispielsweise verwenden, um Energiespeicher von Schienenfahrzeugen zu betreiben. Beispielsweise kann der Kondensator zum Zwischenspeichern von Fahrenergie eines Schienenfahrzeuges verwendet werden, wobei der Kondensator aufgeladen wird, wenn das Schienenfahrzeug abgebremst wird, indem die freiwerdende kinetische Energie des Fahrzeuges nach einer energetischen Umwandlung als elektrische Energie in den Kondensator eingespeist wird. Entsprechend wird der Kondensator entladen, wenn das Schienenfahrzeug beschleunigt werden soll, wobei die im Kondensator gespeicherte Energie zum Beschleunigen des Fahrzeugs verwendet wird.

Kommt es zu einer unzulässigen Erhöhung der Temperatur des Kondensators, beispielsweise bei hohen Umgebungstemperaturen während des Sommers, so wird - wie eingangs erläutert - die aus dem Kondensator entnehmbare Leistung begrenzt, so dass die zur Verfügung stehende Leistung unter Umständen nicht mehr zum Beschleunigen des Fahrzeuges ausreicht. In diesem Falle wird die für den Beschleunigungsvorgang des Fahrzeuges erforderliche "Restenergie" vorzugsweise aus einer anderen Energiequelle entnommen, beispielsweise aus einem elektrischen Fahrdraht, mit dem das Fahrzeug in Verbindung steht.

Besonders bevorzugt lässt sich das erfindungsgemäße Verfahren bei Doppelschichtkondensatoren durchführen; Doppelschichtkondensatoren weisen als Elektrolyt üblicherweise Acetonitril auf, dessen Siedetemperatur 81°C beträgt. Ein Erwärmen des Kondensators auf Temperaturbereiche nahe der Siedetemperatur wird vorzugsweise - wie erläutert durch Erhöhen der Minimalspannung - vermieden, insbesondere auch deshalb, weil bei einem Betrieb derartiger Doppelschichtkondensatoren im oberen Temperaturbereich die Lebensdauer deutlich reduziert werden würde.

Erreicht die Innentemperatur des Kondensators einen für den Kondensator vorgegebenen Maximaltemperaturwert, so wird die Minimalspannung vorzugsweise auf den Wert der Maximalspannung gesetzt, so dass eine weitere Energieentnahme aus dem Kondensator verhindert wird. Der Kondensator bleibt somit in seinem aufgeladenen Zustand, so dass keine weitere Erwärmung des Kondensators auftreten kann.

Das Erhöhen der Minimalspannung in Abhängigkeit von der jeweiligen Innentemperatur des Kondensators kann vorteilhaft beispielsweise in der Art erfolgen, dass die Minimalspannung auf einen fest vorgegebenen Standardwert festgelegt wird, sofern der Temperaturwert unterhalb einer vorgegebenen Normalbetriebstemperatur liegt. Sobald die Kondensatortemperatur die Normalbetriebstemperatur überschreitet, wird die Minimalspannung gemäß einer vorgegebenen Anstiegsfunktion in Abhängigkeit von der jeweiligen Temperatur erhöht.

Das Erhöhen der Minimalspannung in Abhängigkeit von der Innentemperatur des Kondensators kann beispielsweise linear erfolgen. Alternativ können auch andere Anstiegsfunktionen gewählt werden, beispielsweise kann die Minimalspannung quadratisch oder exponentiell in Abhängigkeit von der Innentemperatur angehoben werden.

Bevorzugt wird der Standardwert für die Minimalspannung des Kondensators auf 50% des Maximalspannungswertes festgelegt. Bei einem solchen Minimalspannungswert lassen sich 75% der im Kondensator gespeicherten Energie entnehmen.

Die Innentemperatur des Kondensators kann beispielsweise unmittelbar bestimmt werden, indem sie mittels eines Temperatursensors unmittelbar gemessen wird. Der Messsensor kann beispielsweise im Inneren des Kondensators angeordnet sein, damit er die Temperatur des Elektrolyts unmittelbar messen kann.

Alternativ kann die Innentemperatur des Kondensators auch mittelbar bestimmt werden, indem sonstige Messwerte zur Bestimmung der Innentemperatur herangezogen werden. Beispielsweise kann die Innentemperatur des Kondensators mit Hilfe von Messwerten bestimmt werden, die die Umgebungstemperatur des Kondensators, den durch den Kondensator fließenden Strom, den elektrischen Innenwiderstand des Kondensators und den thermischen Widerstand des Kondensators angeben. Durch Multiplikation der Messwerte für das Quadrat des Stromes und den Innenwiderstand kann nämlich die Verlustleistung innerhalb des Kondensators berechnet werden. Je nach der äußeren Umgebungstemperatur des Kondensators ergibt sich dann aufgrund der Verlustleistung im Inneren des Kondensators und eines geeigneten Temperaturmodells (thermische Widerstände) dessen Innentemperatur.

Die mittelbare Bestimmung der Innentemperatur kann beispielsweise erfolgen, indem aus einer vorgegebenen Temperaturtabelle in Abhängigkeit von den Messwerten für die Umgebungstemperatur, den Kondensatorwiderstand und den Strom der jeweilige Temperaturwert ausgelesen wird; selbstverständlich können in der Tabelle die Werte für den Kondensatorinnenwiderstand und für den Strom zusammengefasst in Form eines elektrischen Leistungswertes eingetragen sein.

Alternativ kann die Bestimmung der Innentemperatur des Kondensators auch dadurch erfolgen, dass die Messwerte für die Umgebungstemperatur, den Kondensatorinnenwiderstand und den Strom in eine empirisch oder durch vorherige Simulation ermittelte mathematische Temperaturbestimmungsfunktion eingesetzt werden, mit der die Innentemperatur des Kondensators errechnet wird.

Insbesondere bei Doppelschichtkondensatoren auf der Basis von Acetonitril erhöht sich der Innenwiderstand des Kondensators in Abhängigkeit von dessen Alterungszustand stark, sodass der Kondensatorinnenwiderstand regelmäßig oder kontinuierlich gemessen werden sollte, damit die Bestimmung der Innentemperatur des Kondensators auf der Basis einer Berechnung unter Verwendung des Kondensatorinnenwiderstands möglichst genau ist. Die Messung des Kondensatorinnenwiderstands kann beispielsweise dadurch erfolgen, dass die Ausgangspannung des Kondensators sowie der durch den Kondensator fließende Strom gemessen werden und eine Quotientenbildung der entsprechenden Messwerte durchgeführt wird.

Die Erfindung bezieht sich darüber hinaus auf einen Kondensator, bei dem auch bei ungünstigen äußeren Randbedingungen, wie beispielsweise einer hohen Umgebungstemperatur, und/oder bei erfolgter Alterung eine optimale Ausnutzung des noch nutzbaren Energiespeicherpotenzials des Kondensators möglich ist.

Zur Lösung dieser Aufgabe ist erfindungsgemäß ein Energiespeicher vorgesehen, bei dem eine Steuereinrichtung vorhanden ist, die den Energieentnahmevorgang steuert, indem sie eine Energieentnahme des Kondensators nur soweit erlaubt, dass eine vorgegebene Minimalspannung des Kondensators erhalten bleibt. Die Steuereinrichtung wählt die jeweils zulässige Minimalspannung in Abhängigkeit von einem die Innentemperatur des Kondensators angebenden Temperaturwert.

Vorteilhafte Ausgestaltungen des erfindungsgemäßen Energiespeichers sind in Unteransprüchen angegeben.

Bezüglich der Vorteile des erfindungsgemäßen Energiespeichers sei auf die obigen Ausführungen im Zusammenhang mit dem erfindungsgemäßen Verfahren verwiesen.

Die Erfindung wird nachfolgend anhand zweier Ausführungsbeispiele erläutert; dabei zeigen:

Figur 1    ein erstes Ausführungsbeispiel eines erfindungemäßen Energiespeichers mit einem Kondensator sowie einer Steuereinrichtung, die den Energieentnahmevorgang aus dem Kondensator steuert und hierzu die Innentemperatur des Kondensators mittelbar bestimmt, und

Figur 2    ein zweites Ausführungsbeispiel eines erfindungemäßen Energiespeichers mit einem Kondensator sowie einer Steuereinrichtung, die die Innentemperatur des Kondensators unmittelbar bestimmt.

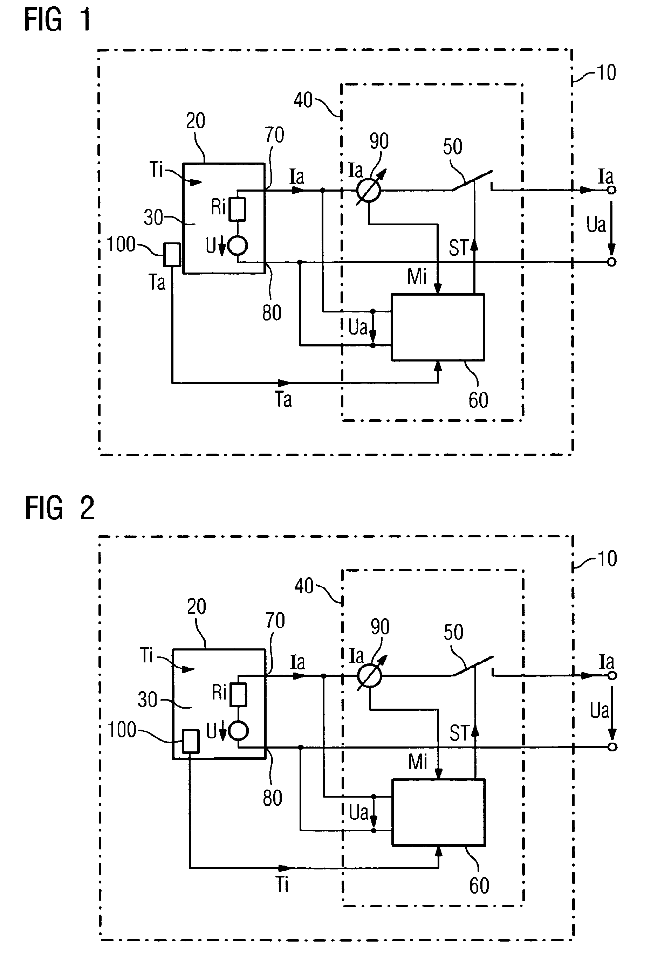

In den Figuren 1 und 2 werden für vergleichbare oder identische Komponenten dieselben Bezugszeichen verwendet.

In der Figur 1 ist ein Energiespeicher 10 dargestellt, der beispielsweise zum Zwischenspeichern von Fahrenergie eines in der Figur 1 nicht weiter dargestellten Schienenfahrzeugs verwendet werden kann.

Der Energiespeicher 10 wird zum Zwischenspeichern von Fahrenergie jeweils dann aufgeladen, wenn das Fahrzeug abgebremst wird, indem die freiwerdende kinetische Energie des Fahrzeugs als elektrische Energie in den Energiespeicher 10 eingespeist wird. Wenn das Fahrzeug wieder beschleunigt, wird die zuvor in dem Energiespeicher 10 gespeicherte elektrische Energie aus diesem entnommen und zum Beschleunigen des Fahrzeuges verwendet.

Der Energiespeicher 10 weist einen Doppelschichtkondensator 20 mit einem darin enthaltenen Elektrolyt 30 auf, bei dem es sich beispielsweise um Acetonitril mit einer Siedetemperatur von 81°C handelt.

Der Energiespeicher 10 ist darüber hinaus mit einer Steuereinrichtung 40 ausgestattet, die eine Schalteinrichtung 50 sowie eine Auswerteeinrichtung 60 umfasst. Die Auswerteeinrichtung 60 steht mit den beiden äußeren Anschlüssen 70 und 80 des Doppelschichtkondensators 20 in Verbindung und misst die jeweilige Ausgangspannung Ua des Doppelschichtkondensators 20. Darüber hinaus steht die Auswerteeinrichtung 60 mit einer Strommesseinrichtung 90 in Verbindung, mit der sie den jeweiligen Ausgangsstrom Ia des Doppelschichtkondensators 20 kontinuierlich misst; das die Größe des Ausgangsstroms Ia angebende Messsignal ist in der Figur 1 mit dem Bezugszeichen Mi gekennzeichnet.

Die Funktion der Steuereinrichtung 40 besteht darin, den Aufladevorgang und den Entladevorgang des Doppelschichtkondensators 20 zu steuern:

Im Falle eines Aufladevorgangs misst die Auswerteeinrichtung 60 der Steuereinrichtung 40 kontinuierlich die Ausgangsspannung Ua des Kondensators und bricht durch ein Öffnen der Schalteinrichtung 50 den Aufladevorgang ab, sobald die Ausgangsspannung Ua eine vorgegebene Maximalspannung Umax erreicht hat. Der Kondensator ist dann vollständig aufgeladen und kann keine weitere Energie aufnehmen. Die Auswerteeinrichtung 60 kann beispielsweise durch eine Mikroprozessoranordnung mit einer Speichereinrichtung gebildet sein, in der die entsprechenden Steuerparameter und Verfahrensabläufe abgespeichert sind.

Zum Entladen des Doppelschichtkondensators 20 überwacht die Auswerteeinrichtung 60 sowohl die Ausgangsspannung Ua als auch den Ausgangsstrom Ia sowie mit Hilfe eines äußeren Temperatursensors 100 die Umgebungstemperatur Ta des Doppelschichtkondensators 20. Mit Hilfe dieser Messwerte Ua, Ia und Ta ermittelt die Auswerteeinrichtung 60 die jeweilige Innentemperatur Ti im Elektrolyten 30 des Doppelschichtkondensators 20.

Die Ermittlung der Innentemperatur Ti des Kondensators 20 kann dabei dadurch erfolgen, dass die Messwerte Ua, Ia und Ta in eine in der Auswerteeinrichtung 60 fest abgespeicherte Tabelle eingesetzt werden und die entsprechende Innentemperatur Ti ausgelesen wird. Die entsprechende Temperaturtabelle kann beispielsweise empirisch ermittelt worden sein, indem zuvor das thermische Verhalten des Doppelschichtkondensators 20 bei unterschiedlichen Umgebungstemperaturen und unterschiedlichen Betriebsarten erfasst und tabellarisch abgespeichert wurde. Alternativ können die Messwerte auch in eine mathematische Temperaturbestimmungsfunktion eingesetzt werden, die das Temperaturverhalten des Kondensators beschreibt; diese mathematische Temperaturbestimmungsfunktion kann empirisch oder durch Simulation erstellt werden. Wird der Temperatursensor 100 unmittelbar auf den Kondensator 20 aufgesetzt, so entspricht die gemessene Temperatur ungefähr - bis auf ca. 0,5 bis 1 Grad Celsius Abweichung genau - der Innentemperatur des Kondensators 20, so dass der Messwert des Kondensators 20 auch unmittelbar als Innentemperaturmesswert weiterverwendet werden kann.

Sobald die Auswerteeinrichtung 60 die Innentemperatur Ti des Kondensators 20 ermittelt hat, vergleicht sie diese mit einer für den Doppelschichtkondensator fest vorgegebenen, in der Auswerteeinrichtung 60 abgespeicherten Normalbetriebstemperatur Tnorm. Solange die Temperatur Ti, die Normalbetriebstemperatur Tnorm unterschreitet bzw. maximal so groß wie die Normalbetriebstemperatur ist, wird die für einen Entladevorgang zulässige Minimalspannung Umin auf einen Wert von Umin0 = 50% Umax gesetzt.

Überschreitet jedoch die Innentemperatur Ti die Normalbetriebstemperatur Tnorm, so wird die Minimalspannung linear erhöht, und zwar gemäß einer vorgegebenen Rampenfunktion; die Rampenfunktion kann beispielsweise wie folgt aussehen:

$$\text{Umin = (Ti - Tnorm)/(Tmax-Tnorm) * } \Delta\text{U + Umin0,}$$

wobei $\Delta$U die Steilheit der Rampenfunktion und Tmax die maximal zulässige Betriebstemperatur des Kondensators bezeichnen.

Gemäß dieser Zuordnung wird somit die Minimalspannung Umin mit ansteigender Innentemperatur Ti des Kondensators erhöht, so dass die aus dem Kondensator entnehmbare Energie begrenzt wird. Sollte es zu einem weiteren Ansteigen der Temperatur, beispielsweise aufgrund einer sehr hohen Ausgangstemperatur Ta außerhalb des Kondensators 20 dazu kommen, sodass die Innentemperatur Ti des Kondensators 20 eine für den Kondensator vorgegebene Maximaltemperatur Tmax erreicht oder überschreitet, so wird die Minimalspannung auf einen Wert

$$\text{Umin = Umax}$$

gesetzt, so dass aus dem Kondensator 20 keine weitere Energie mehr entnommen werden kann. Für einen stetigen Verlauf der Rampenfunktion wird $\Delta$U vorzugsweise wie folgt gewählt:

$$\Delta\text{U = Umax - Umin0}$$

Sobald Ua die jeweils zulässige Minimalspannung Umin bzw. U-min(Ti) erreicht, unterbindet die Auswerteeinrichtung 60 die weitere Energieentnahme, indem sie den Entladestrom Ia aus dem Kondensator 20 mittels der Schalteinrichtung 50 abschaltet. Damit kann über den Innenwiderstand Ri des Kondensators 20 kein weiterer Spannungsabfall auftreten und somit auch keine weitere Erwärmung des Kondensators 20 erfolgen.

In der Figur 2 ist ein weiteres Ausführungsbeispiel für einen Energiespeicher 10 gezeigt. Man erkennt, dass bei diesem Ausführungsbeispiel der Temperatursensor 100 innerhalb des Doppelschichtkondensators 20 angeordnet ist und somit die Innentemperatur Ti des Kondensators 20 unmittelbar misst. Die Steuereinrichtung 40 kann somit auf einen die Innentemperatur Ti angebenden Messwert unmittelbar zurückgreifen und muss diesen nicht mittelbar durch Auswerten der Ausgangsspannung Ua, des Ausgangsstromes Ia sowie der äußeren Temperatur Ta in der Umgebung des Kondensators 20 ermitteln.

Im Übrigen funktioniert die Steuereinrichtung 40 analog zu der Steuereinrichtung 40 gemäß Figur 1.

**Patentansprüche**

1.  Verfahren zum Betreiben eines Kondensators (20), insbesondere als Energiespeicher für Schienenfahrzeuge, bei dem

    - zum Abspeichern von Energie der Kondensator (20) aufgeladen wird, und zwar maximal soweit, bis er eine vorgegebene Maximalspannung (Umax) erreicht, und
    - zur Energieentnahme der Kondensator (20) entladen wird, jedoch nur soweit, dass eine vorgegebene Minimalspannung (Umin) erhalten bleibt,
    - wobei die Minimalspannung eine variable Größe ist, die in Abhängigkeit von einem die jeweilige Innentemperatur (Ti) des Kondensators angebenden Temperaturwert eingestellt

    **dadurch gekennzeichnet dass**
    die Minimalspannung umso größer gewählt wird, je größer der Temperaturwert ist.

2.  Verfahren nach Anspruch 1, **dadurch gekennzeichnet, dass** die Minimalspannung auf den Wert der Maximalspannung gesetzt wird, wenn die Innentemperatur einen für den Kondensator vorgegebenen Maximaltemperaturwert erreicht.

3.  Verfahren nach einem der Ansprüche 1 oder 2, **dadurch gekennzeichnet,**

    - **dass** die Minimalspannung auf einen fest vorgegebenen Standardwert (Umin0 festgelegt wird, sofern der Temperaturwert unterhalb einer vorgegebenen Normalbetriebstemperatur (Tnorm) liegt, und
    - **dass** bei Temperaturwerten oberhalb der Normalbetriebstemperatur die Minimalspannung gemäß einer vorgegebenen Anstiegsfunktion in Abhängigkeit von dem Temperaturwert erhöht wird.

4.  Verfahren nach Anspruch 3, **dadurch gekennzeichnet, dass** bei Temperaturwerten oberhalb der Normalbetriebstemperatur die Minimalspannung in Abhängigkeit von dem Temperaturwert linear ansteigend erhöht wird.

5.  Verfahren nach Anspruch 3, **dadurch gekennzeichnet, dass** bei Temperaturwerten oberhalb der Normalbetriebstemperatur die Minimalspannung in Abhängigkeit von dem Temperaturwert quadratisch ansteigend erhöht wird.

6.  Verfahren nach Anspruch 3, **dadurch gekennzeichnet, dass** bei Temperaturwerten oberhalb der Normalbetriebstemperatur die Minimalspannung in Abhängigkeit von dem Temperaturwert exponentiell ansteigend erhöht wird.

7.  Verfahren nach einem der Ansprüche 1 bis 6, **dadurch gekennzeichnet, dass** der Standardwert der Minimalspannung auf 50% des Wertes der Maximalspannung festgesetzt wird.

8.  Energiespeicher (10) mit einem Kondensator (20) zum Speichern elektrischer Energie und mit einer mit dem Kondensator (20) in Verbindung stehenden Steuereinrichtung (40), wobei die Steuereinrichtung Mittel zum Aufladen und Entladen des Kondensators nach einem der voranstehenden Ansprüche 1-7 enthält.

**Claims**

1.  Method for operation of a capacitor (20), in particular as an energy store for rail vehicles, in which

    - in order to store energy, the capacitor (20) is charged, to be precise at most such that it reaches a predetermined maximum voltage (Umax), and

- in order to draw energy, the capacitor (20) is discharged, but only until a predetermined minimum voltage (Umin) remains,
- with the minimum voltage being a variable parameter which is set as a function of a temperature value, which indicates the respective internal temperature (Ti) of the capacitor,

**characterized in that**
the minimum voltage is chosen to be higher the higher the temperature value is.

**2.** Method according to Claim 1, **characterized in that** the minimum voltage is set to that value of the maximum voltage where the internal temperature reaches a maximum temperature value specified for that capacitor.

**3.** Method according to one of Claims 1 or 2, **characterized**

- **in that** the minimum voltage is defined to be a fixed predetermined standard value (Umin0) when the temperature value is below a specified normal operating temperature (Tnorm) and
- **in that**, if the temperature values are above the normal operating temperature, the minimum voltage is increased in accordance with a predetermined rise function, as a function of the temperature value.

**4.** Method according to Claim 3, **characterized in that**, if the temperature values are above the normal operating temperature, the minimum voltage is increased in a linearly rising manner, as a function of the temperature value.

**5.** Method according to Claim 3, **characterized in that**, if the temperature values are above the normal operating temperature, the minimum voltage is increased such that it rises in accordance with a square law, as a function of the temperature value.

**6.** Method according to Claim 3, **characterized in that**, if the temperature values are above the normal operating temperature, the minimum voltage is increased such that it rises in accordance with an exponential law, as a function of the temperature value.

**7.** Method according to one of Claims 1 to 6, **characterized in that** the standard value of the minimum value is fixed at 50% of the value of the maximum voltage.

**8.** Energy store (10) having a capacitor (20) for storage of electrical energy and having a control device (40) which is connected to the capacitor (20), with the control device containing means for charging and discharging the capacitor according to one of the preceding Claims 1 - 7.

**Revendications**

**1.** Procédé pour faire fonctionner un condensateur ( 20 ), notamment comme accumulateur d'énergie, pour des véhicules ferroviaires, dans lequel

- pour emmagasiner de l'énergie, on charge le condensateur ( 20 ), et cela au maximum, jusqu'à ce qu'il atteigne une tension ( Umax ) maximum prescrite, et
- pour prélever de l'énergie, on décharge le condensateur ( 20 ), mais cependant seulement jusqu'à ce qu'il reste une tension ( Umin ) minimum prescrite,
- la tension minimum étant une grandeur variable qui est réglée en fonction d'une valeur de température indiquant la température ( Ti ) intérieure respective du condensateur,

**caractérisé en ce que** l'on choisit la tension minimum d'autant plus grande que la valeur de la température est plus haute.

**2.** Procédé suivant la revendication 1, **caractérisé en ce que** l'on met la tension minimum à la valeur de la tension maximum si la température intérieure atteint une valeur de température maximum prescrite pour le condensateur.

**3.** Procédé suivant l'une des revendications 1 ou 2, **caractérisé**

- **en ce que** l'on fixe la tension minimum à une valeur ( Umin0 ) étalon prescrite de manière fixe, dans la mesure où la valeur de la température est inférieure à une température ( Tnorm ) de fonctionnement normale prescrite, et
- **en ce que**, pour des valeurs de température supérieures à la température de fonctionnement normale, on élève la tension minimum en fonction de la valeur de température suivant une fonction de croissance prescrite.

4. Procédé suivant la revendication 3, **caractérisé en ce que**, pour des valeurs de température supérieures à la température de fonctionnement normale, on augmente d'une manière croissante linéairement la tension minimum en fonction de la valeur de la température.

5. Procédé suivant la revendication 3, **caractérisé en ce que**, pour des valeurs de température supérieures à la température de fonctionnement normale, on augmente de manière croissante au carré la tension minimum en fonction de la valeur de la température.

6. Procédé suivant la revendication 3, **caractérisé en ce que**, pour des valeurs de température supérieures à la température de fonctionnement normale, on augmente d'une manière croissante exponentiellement la tension minimum en fonction de la valeur de la température.

7. Procédé suivant l'une des revendications 1 à 6, **caractérisé en ce qu'**on fixe la valeur étalon de la tension minimum à 50 % de la valeur de la tension maximum.

8. Accumulateur ( 10 ) d'énergie comprenant un condensateur ( 20 ) d'emmagasinage d'énergie électrique et un dispositif ( 40 ) de commande en liaison avec le condensateur ( 20 ), dans lequel le dispositif de commande comporte des moyens de charge et de décharge du condensateur suivant l'une des revendications précédentes 1 à 7.

## FIG 1

## FIG 2

**EP 1 872 456 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003139859 A1